# EUROPÄISCHE PATENTSCHRIFT

(11) **EP 2 977 303 B1**
(45) Veröffentlichungstag und Bekanntmachung des Hinweises auf die Patenterteilung: **28.03.2018**
(21) Anmeldenummer: 15176973.4
(22) Anmeldetag: 16.07.2015
(51) Int. Cl.: B62J 9/00

(54) **TRANSPORTBEHÄLTER**
TRANSPORT CONTAINER
CONTENEUR

(30) Priorität: 21.07.2014 CH 11072014
(43) Veröffentlichungstag der Anmeldung: 27.01.2016
(73) Patentinhaber: Kyburz Switzerland AG, 8427 Freienstein (CH)
(72) Erfinder: Koch, Michael, 4562 Biberist (CH)
(74) Vertreter: Frei Patent Attorneys

(56) Entgegenhaltungen:
- EP-A1- 1 645 177
- DE-A1- 3 703 397
- DE-A1-102013 015 048
- DE-U1-202008 001 484
- US-A- 251 472
- US-A- 2 823 073
- US-A- 3 841 697
- US-A- 4 265 479

## Beschreibung

Die Erfindung bezieht sich auf das Gebiet der Transportbehälter für Kleinfahrzeuge, und insbesondere auf einen Transportbehälter mit einer Abdeckung, sowie optional auf ein mit dem Transportbehälter ausgerüstetes Transportfahrzeug.

Solche Transportbehälter für Kleinfahrzeuge sind beispielsweise bekannt aus EP 2433854 A2 oder CH 706989 A1 und werden beispielsweise auf zwei- bis vierrädrigen Fahrzeugen oder Motorrädern mit Elektromotor oder Verbrennungsmotor zur Postverteilung eingesetzt. Das Postgut wird in robuste Transportbehälter an der Front und/oder am Heck des Kleinfahrzeugs in Form gefüllt. Dabei können die Transportbehälter entweder vom Zustellvehikel abgenommen oder abmontiert werden, oder aber das Postgut wird direkt in einen Laderaum der Transportbehälter gefüllt, welche sich dauerhaft auf dem Zustellvehikel befinden. Die Transportbehälter weisen Abdeckungen als Schutz vor Witterungseinflüssen und Diebstahl auf.

DE 37 03 397, auf dem der Oberbegriff von Anspruch 1 basiert, zeigt einen Viehtransportanhänger mit einer absenkbaren Laderampe und einer absenkbaren Dachbespannung. Diese weist zwei Paare von Scherenbügeln auf, wobei bei jedem Paar im aufgespannten Zustand des Daches der U-Steg des einen Scherenbügels die Bespannung stützt und der U-Steg des anderen Scherenbügels ("freier Scherenbügel") im Bereich des Scherendrehpunktes, von der Bespannung entfernt liegt. Erst beim Zusammenlegen des Daches drückt der freie Scherenbügel die Bespannung nach aussen und verhindert ein Einfallen der sich lockernden Bereiche der Bespannung. Die Konstruktion des Daches bedingt zwingend, dass die freien Scherenbügel kürzer als die anderen sind, weil sie sonst beim Zusammenlegen die Bespannung nicht einigermassen mittig zwischen den anderen Bügeln erfassen würden,

US 2,823,073 zeigt einen Faltmechanismus für ein Verdeck eines Cabriolets, mit mehreren aneinander gekoppelten Scherenmechanismen. Diese liegen im zusammengefalteten Zustand aufeinander an der Rückseite des Passagierraums, wobei die Scherenachseen vertikal aufeinander liegen, im gestreckten Zustand reichen sie bis zur Windschutzscheibe, wobei die Scherenachsen horizontal nebeneinander liegen.

Eine mögliche Aufgabe der Erfindung ist, einen Transportbehälter mit einer Abdeckung der eingangs genannten Art zu schaffen, bei welchem die Abdeckung in geöffnetem Zustand wenig Raum benötigt.

Eine mögliche Aufgabe der Erfindung ist, einen Transportbehälter der eingangs genannten Art zu schaffen, welcher einfach beladen und entladen werden kann.

Eine weitere mögliche Aufgabe der Erfindung ist, einen Transportbehälter und optional ein mit diesem zusammenwirkendes Transportfahrzeug der eingangs genannten Art zu schaffen, welcher erhöhte Sicherheit bezüglich Diebstahl aufweist und gleichwohl einfach zu bedienen ist.

Mindestens eine dieser Aufgaben wird zumindest teilweise durch Vorrichtungen, Verfahren und Verwendungen gemäss den Patentansprüchen gelöst.

Gemäss einem ersten Aspekt der Erfindung liegt vor: ein Transportbehälter, insbesondere zur Postverteilung, aufweisend einen Boden, an den Boden anschliessende Seitenwände und eine an die Seitenwände anschliessende öffenbare Abdeckung, wobei der Transportbehälter zur Montage auf einem Transportfahrzeug vorgesehen ist. Dabei ist die Abdeckung faltbar und weist einen Überzug auf, welcher durch ein faltbares Gestänge gestützt ist, wobei das Gestänge aufweist:
- mindestens zwei äussere Bügel und zwei innere Bügel, die jeweils um eine Drehachse drehbar montiert sind, wobei die Drehachsen dieser vier Bügel parallel zueinander verlaufen,
- zwei Scherenbügel, wobei jeder der Scherenbügel um eine zugeordnete äussere Scherenachse drehbar mit einem der beiden inneren Bügel verbunden ist und die beiden Scherenbügel um eine zentrale Scherenachse drehbar miteinander verbunden sind, und die Scherenbügel und inneren Bügel zusammen einen Scherenmechanismus bilden,
- wobei jeder der inneren Bügel und jeder der Scherenbügel jeweils zwei seitliche Arme aufweist, welche an einer ersten und einer zweiten Seite der Abdeckung angeordnet sind, parallel zueinander verlaufen und durch mindestens eine Querstrebe verbunden sind, wobei die Querstrebe den Überzug stützt, und
- wobei in einem geöffneten Zustand der Abdeckung die Querstreben der Scherenbügel von den Drehachsen der inneren Bügel weiter entfernt sind als die Querstreben der inneren Bügel selber. Dabei liegen typischerweise im geöffneten Zustand an jeder Seite die seitlichen Arme zumindest annähernd parallel zueinander.

Damit ist es möglich, die Abdeckung in geöffnetem Zustand auf kleinem Raum zusammenzufalten. Die Querstreben der Scherenbügel sind von den übrigen Querstreben beabstandet, so dass die übrigen Querstreben dicht aufeinander gelegt werden können. Durch diesen Abstand ist ein Bereich definiert, in welchem der Überzug in gefalteter Form verbleiben kann.

Die Querstreben der verschiedenen Bügel verlaufen typischerweise im Wesentlichen parallel zueinander, also mit verstellbarem aber jeweils entlang der Bügel betrachtet gleichbleibendem Abstand zueinander.

In einer Ausführungsform verlaufen in einem geschlossenen Zustand der Abdeckung die Querstreben der inneren Bügel und der Scherenbügel zumindest annähernd in einer gemeinsamen Ebene.

Damit ist eine Abdeckung realisiert, die - im Gegensatz zu einer Abdeckung wie beispielsweise einem Kinderwagen - eine im Vergleich zum abgedeckten Bereich geringe Höhe aufweist. Dies ist beim Einsatz auf einem Kleinfahrzeug von Vorteil.

Indem die Abdeckung durch die verschiedenen Querstreben gestützt sind, kann Regenwasser zuverlässig von der Abdeckung abfliessen.

Damit ist es möglich, einen im Wesentlichen flachen Oberteil der Abdeckung zu realisieren, welche im wesentlichen vollständig aufklappbar ist, indem die Querstreben der inneren Bügel aufeinander geklappt werden, wobei die Querstreben der Scherenbügel (in radialer Richtung bezüglich ihrer Drehachsen) weiter ausserhalb zu liegen kommen.

Querstreben der äusseren Bügel können im geöffneten Zustand ebenfalls im Bereich der Querstreben der inneren Bügel liegen. Sie weisen dann also im wesentlichen denselben Abstand einer Drehgelenkachse der inneren und äusseren Bügel auf.

Die seitlichen Arme verlaufen also jeweils an der ersten und zweiten Seite der Abdeckung, wobei die erste Seite der zweiten gegenüberliegt. Die seitlichen Arme an jeweils einer Seite bewegen sich im wesentlichen innerhalb einer Ebene. Die entsprechenden beiden Ebenen sind im wesentlichen parallel zueinander und im wesentlichen senkrecht zu den Querstreben.

Die Drehachsen der vier Bügel können im Wesentlichen parallel zu einem ersten Paar der Seitenwände verlaufen. Sie können im Wesentlichen in der Mitte zwischen diesen beiden Seitenwänden verlaufen.
- Die Drehachsen der beiden inneren Bügel können miteinander koinzidieren oder weniger als 10% des Abstandes dieser Drehachsen zu der jeweiligen Querstrebe des inneren Bügels voneinander beabstandet sein.
- Die Drehachsen der beiden äusseren Bügel können miteinander koinzidieren oder weniger als 10% des Abstandes dieser Drehachsen zu der jeweiligen Querstrebe des inneren Bügels voneinander beabstandet sein.
- Die Drehachsen der inneren und äusseren Bügel können miteinander koinzidieren oder weniger als 10% des Abstandes dieser Drehachsen zu der jeweiligen Querstrebe des inneren Bügels voneinander beabstandet sein.

Die seitlichen Arme der äusseren Bügel und/oder die seitlichen Arme der inneren Bügel können um dasselbe Drehgelenk drehbar sein, wobei aber eine Hauptausdehnungsrichtung der Arme nicht durch das Drehgelenk führt. Damit kann erreicht werden, dass im maximal geöffneten Zustand die jeweiligen seitlichen Arme parallel zueinander verlaufen. Beispielsweise weisen dazu die seitlichen Arme jeweils anschliessend an das Drehgelenk einen Knick auf.

Der Überzug besteht typischerweise aus einem flexiblen flächigen Material. Der Überzug kann auch ganz oder teilweise aus elastischem Material bestehen. Der Überzug kann abschnittsweise steif sein und in anderen Bereichen faltbar sein respektive Knickstellen aufweisen.

Der Überzug kann Metallfäden oder -Drähte aufweisen, beispielsweise in textiler Form. Damit kann ein Aufschneiden des Überzugs verhindert oder erschwert werden.

In einer Ausführungsform sind die Fäden der Drähte an Sensoren angeschlossen, welche erkennen, wenn ein Faden oder Draht unterbrochen wird. Die Sensoren wiederum können mit einer Alarmanlage verbunden sein, welche in diesem Fall optische und/oder akustische Alarmsignale auslöst. Alternativ oder zusätzlich können die Sensoren mit einer drahtlosen Kommunikationseinrichtung verbunden sein, welche Informationen über einen Alarm an eine entfernte Datenverarbeitungseinheit übermittelt. Erfindungsgemäß verläuft entlang der zentralen Scherenachse der beiden Scherenbügel eine weitere Querstrebe. Diese weitere Querstrebe bildet eine weitere Stütze des Überzugs und verbessert dadurch dessen Abstützung. In einer Ausführungsform ist der Abstand zwischen der zentralen Scherenachse und den äusseren Scherenachsen zumindest annähernd gleich dem Abstand der Querstreben der inneren Bügel zu den äusseren Scherenachsen. Damit kommen im maximal geöffneten Zustand der Abdeckung die Querstreben der inneren Bügel auf die weitere Querstrebe zu liegen.

In einer Ausführungsform weisen die seitlichen Arme der Scherenbügel jeweils erste Abschnitte zwischen der entsprechenden äusseren Scherenachse und der zentralen Scherenachse sowie zweite Abschnitte zwischen der zentralen Scherenachse und der Querstrebe auf, und sind die ersten und zweiten Abschnitte zueinander angewinkelt. Mit anderen Worten: die beiden Scherenachsen und die Querstrebe eines Scherenbügels liegen nicht in einer Ebene.

Damit kann erreicht werden, dass beim Öffnen der Abdeckung zunächst das Oberteil der Abdeckung gerade angehoben wird (und somit darunterliegendes Transportgut nicht berührt wird) und erst anschliessend zusammengefaltet wird.

Die zweiten Abschnitte von jeweils zwei verbundenen seitlichen Armen führen dadurch im offenen Zustand der Abdeckung voneinander weg, wodurch zwischen den beiden Querstreben Raum für den zusammengefalteten Überzug bleibt.

Falls der Abstand zwischen der Drehachse eines inneren Bügels und seiner äussern Scherenachse gleich der Länge des ersten Abschnittes des zugeordneten Scherenbügels ist, so ist ein Winkel zwischen dem ersten und zweiten Abschnitt zumindest annähernd gleich dem halben Winkel zwischen einem der inneren Bügel und dem entsprechenden Scherenbügel im geschlossenen Zustand.

Damit kann erreicht werden, dass die Querstreben der Scherenbügel und die Querstreben der inneren Bügel im offenen Zustand der Abdeckung im wesentlichen in einer Ebene liegen oder die Querstreben der Scherenbügel leicht höher liegen als die Querstreben der inneren Bügel. Bei anderen Abständen zwischen den Drehachsen und anderen Längenverhältnissen der Abschnitte der Scherenbügel können die Winkel zwischen den ersten und zweiten Abschnitten der Scherenbügel und die Länge der zweiten Abschnitte der Scherenbügel so gewählt werden, dass die Querstreben der Scherenbügel so liegen wie im vorangehenden Satz beschrieben.

In einer Ausführungsform sind im maximal geöffneten Zustand der Abdeckung die Querstreben der Scherenbügel von den Drehachsen der inneren Bügel um mindestens 10% oder mindestens 20% oder mindestens 30% weiter entfernt als die Querstreben der inneren Bügel selber.

In einer Ausführungsform definieren im geschlossenen Zustand der Abdeckung die Querstreben der inneren Bügel eine Ebene und verlaufen die Querstreben der Scherenbügel und die optionale weitere Querstrebe mit einem Abstand zu dieser Ebene von maximal 10%, maximal 20% oder maximal 30% des Abstandes der Querstreben der inneren Bügel.

In einer Ausführungsform weist der Transportbehälter mindestens einen Feststellmechanismus auf zur Einstellung einer Reibung in zumindest Drehgelenken zu den Drehachsen der inneren Bügel und optional auch Drehgelenken zu den Drehachsen der äusseren Bügel.

Damit kann eine Haltekraft oder ein Haltemoment der Drehgelenke einstellbar sein. Bei einem solcherart eingestellten Haltemoment ist beispielsweise die Abdeckung von Hand verstellbar, wird aber durch die Schwerkraft oder einen Windstoss nicht verstellt.

In einer Ausführungsform weist der Transportbehälter zwei separat betätige Feststellgriffe auf, jeweils an einer der Seiten der Abdeckung, wobei ein Drehsinn der Feststellgriffe zum Erhöhen der Reibung in den jeweiligen Drehgelenken in einem gemeinsamen Bezugssystem gleich ist.

Mit anderen Worten führt der eine Feststellgriff beispielsweise mit einer von der Innenseite der Abdeckung her gesehenen Linksdrehung zu einem Feststellen der entsprechenden Drehgelenke, und der andere Feststellgriff mit einer von der Innenseite der Abdeckung her gesehenen Rechtsdrehung. Anstelle eines Feststellmechanismus durch Anziehen einer Schraube können auch andere Spannmechanismen realisiert sein, beispielsweise mit einem Exzenterhebel.

Ein Feststellgriff kann beispielsweise ein Hebel oder Drehknopf sein. Er kann innerhalb oder ausserhalb der Abdeckung angeordnet sein.

Gemäss einem zweiten Aspekt der Erfindung, der mit dem ersten und/oder mit dem dritten Aspekt und all deren jeweiligen Ausführungsformen kombiniert sein kann oder gänzlich unabhängig realisiert sein kann, liegt vor: ein Transportbehälter, insbesondere zur Postverteilung, aufweisend einen Boden, an den Boden anschliessende Seitenwände und eine an die Seitenwände anschliessende öffenbare Abdeckung, wobei der Transportbehälter zur Montage auf einem Transportfahrzeug vorgesehen ist. Dabei ist mindestens eine der Seitenwände dazu ausgebildet, geöffnet, insbesondere aufgeklappt zu werden, und dadurch einen Zugang zum Inneren des Transportbehälters zu erlauben.

Eine solche öffenbare Seitenwand kann dadurch als Ladeklappe verwendet werden, d.h. um den Transportbehälter mit Transportgut, insbesondere mit Transportkisten, zu beladen oder solche zu entfernen, ohne dass die Abdeckung geöffnet oder entfernt werden muss. Auch ist es möglich, den Transportbehälter bei geöffneter Klappe von der entsprechenden Seite her zu beladen und zu entladen. Die Transportkisten müssen dabei nicht angehoben werden sondern können seitlich eingeschoben respektive herausgezogen werden, was die Handhabung vereinfacht und die körperliche Belastung des Personals reduziert.

In einer Ausführungsform ist die aufklappbare Seitenwand eine Klappe, welche um eine Achse parallel zum Boden klappbar ist.

In einer Ausführungsform bildet die Klappe in einem aufgeklappten Zustand im Wesentlichen eine Verlängerung des Bodens des Transportbehälters.

In einer Ausführungsform weist der Transportbehälter einen oder mehrere Klappenhalter auf, welche eine Bewegung der Klappe beim Aufklappen begrenzen.

In einer Ausführungsform ist der eine oder mehrere Klappenhalter jeweils innerhalb einer Seitenwand geführt, insbesondere indem der Klappenhalter beim Verschliessen der Klappe entlang einer Führung innerhalb der Seitenwand in die Seitenwand hinein geschoben wird.

In einer Ausführungsform sind der eine oder mehrere Klappenhalter aus einem elastischen Material gebildet, und lässt der Klappenhalter jeweils bei einer Belastung der Klappe im geöffneten Zustand eine Bewegung der Klappe über eine Position hinaus zu, welche die Klappe im unbelasteten Zustand einnimmt. Beispielsweise beträgt eine Nachgiebigkeit der Klappe bei senkrechter Belastung einer äusseren Kante der offenen Klappe ca. 2° pro kg. Die Drehung der Klappe nach unten kann durch eine mechanische Begrenzung auf ca. 10° begrenzt sein.

Dadurch können der oder die Klappenhalter vor einer Überbelastung geschützt werden: wenn eine zu schwere Last auf die Klappe gesetzt wird, klappt diese weiter nach unten und lässt die Last abrutschen. Das Material der Klappenhalter kann Polyäthylen oder ein anderer elastischer Kunststoff sein.

Ein Scharnier zwischen der Klappe und dem Boden kann durch ein Filmscharnier gebildet sein. Boden und Klappe können dabei einstückig gefertigt werden.

Gemäss einem dritten Aspekt der Erfindung, der mit dem ersten und/oder mit dem zweiten Aspekt und all deren jeweiligen Ausführungsformen kombiniert sein kann oder gänzlich unabhängig realisiert sein kann, liegt vor: ein Transportbehälter, insbesondere zur Postverteilung, aufweisend einen Boden, an den Boden anschliessende Seitenwände und eine an die Seitenwände anschliessende öffenbare Abdeckung, wobei der Transportbehälter zur Montage auf einem Transportfahrzeug vorgesehen ist. Dabei ist die Abdeckung mit einer elektromechanischen Schliessvorrichtung verschliessbar und ist die Schliessvorrichtung über eine Steuerschnittstelle öffenbar.

Das Schliesssystem ist mit verschiedenen Arten von Abdeckungen kombinierbar, z.B. mit faltbaren Abdeckungen, insbesondere gemäss dem ersten Aspekt der Erfindung, aber auch beispielsweise mit einer Abdeckung bestehend aus einem Deckel aus einem Teil, oder aus einer Kombination von zwei Halbschalen. Ferner kann das Schliesssystem dazu ausgebildet sein, nicht nur das Öffnen resp. Verschliessen einer Abdeckung zu ermöglichen, sondern gleichzeitig auch das Öffnen oder Verschliessen einer Seitenwand. Beispielsweise kann ein Rastbolzen oder Schliesskolben des Schliesssystems die Seitenwand und die Abdeckung gegeneinander festhalten und dabei eine Öffnungsbewegung beider Teile verhindern. Es können aber auch separate und separat betätigbare Schliesssysteme für die Abdeckung und für eine Seitenwand vorliegen.

Gemäss einer Ausführungsform ist die Schliessvorrichtung an einer als Klappe ausgebildeten Seitenwand angeordnet. Im geschlossenen Zustand der Abdeckung kann ein Bügel der Abdeckung, indem er mit der Klappe verbunden ist oder einen Teil der Klappe umfängt ein Öffnen der Klappe verhindern.

In einer Ausführungsform über die Steuerschnittstelle zum Anschluss an eine korrespondierende Schnittstelle des Transportfahrzeugs und zum Empfang eines Öffnungssignals zum Öffnen der Schliessvorrichtung vom Transportfahrzeug ausgebildet ist.

In einer Ausführungsform ist die Schliessvorrichtung zusätzlich nicht nur über das Öffnungssignal sondern auch mittels eines zweiten, vorzugsweise rein mechanischen Betätigungselementes öffenbar. Beispielsweise kann die Schliessvorrichtung mit einem Schlüssel öffenbar sein, der mit einem rein mechanischen Schloss der Schliessvorrichtung zusammenwirkt. So kann auch beim Ausfall der elektromechanischen Komponenten des Schliesssystems, oder falls kein Öffnungssignal erzeugt werden kann, der Zugriff zum Inneren des Transportbehälters ermöglicht werden.

Der Transportbehälter weist typischerweise Dimensionen auf, die dem Einsatz auf einem Kleinfahrzeug als Transportfahrzeug entsprechen. Beispielsweise betragen eine Breite und eine Tiefe des Transportbehälters jeweils weniger als 150cm und beträgt eine Höhe des Transportbehälters weniger als 100 cm.

Gemäss einem weiteren Aspekt der Erfindung liegt ein Transportfahrzeug vor, mit einem daran angeordneten Transportbehälter gemäss einem der vorangehend beschriebenen Aspekte, wobei die Steuerschnittstelle des Transportbehälters an eine korrespondierende Schnittstelle des Transportfahrzeugs angeschlossen ist und der Transportbehälter zum Empfang eines Öffnungssignals zum Öffnen der Schliessvorrichtung vom Transportfahrzeug ausgebildet ist.

Die Steuerschnittstelle kann dauernd an das Transportfahrzeug angeschlossen sein. Sie kann aber auch über eine lösbare elektrische Verbindung angeschlossen sein, beispielsweise eine Steckverbindung. Die Verbindung kann manuell erstellbar sein oder selbsttätig bei einer Befestigung des Transportbehälters am Transportfahrzeug erstellt werden.

In einer Ausführungsform des Transportfahrzeugs ist eine Steuerung der Öffnung der Schliessvorrichtung des Transportbehälters mit einer Steuerung eines Antriebs des Transportfahrzeugs gekoppelt, über eine Steuerverbindung oder Kommunikationsverbindung. Damit ist es möglich, beispielsweise
- eine Zentralverriegelung sowohl des Fahrzeuges als auch des Transportbehälters zu realisieren.
- das Fahrzeug und den Transportbehälter mittels eines gemeinsamen "keyless"-Systems anzusteuern, also eines Systems, welches die Anwesenheit eines berechtigten Benutzers erkennt, ohne dass dazu ein mechanischer Schlüssel erforderlich ist. Ein solches System kann auf an sich bekannte Technologien für Zutrittssysteme basieren (RFID, NFC, ...)
- allgemein den Transportbehälter nur dann zu öffnen, wenn das Fahrzeug entriegelt d.h. fahrbereit ist.
- den Transportbehälter nur dann zu öffnen, wenn das Fahrzeug nicht fährt.
- das Fahrzeug nur fahren zu lassen, wenn der Transportbehälter geschlossen ist. Dabei ist der Transportbehälter respektive dessen Schliessvorrichtung dazu ausgebildet, Informationen über den Zustand der Schliessvorrichtung (Abdeckung eingerastet und somit geschlossen, Abdeckung nicht eingerastet und somit offen) an die Steuereinheit des Transportfahrzeugs zu übermitteln.

In einer Ausführungsform des Transportfahrzeugs geschieht eine Steuerung der Öffnung der Schliessvorrichtung des Transportbehälters durch eine Steuereinheit des Transportfahrzeugs, und weist die Steuereinheit ferner Mittel zur Bestimmung einer geographischen Position des Transportfahrzeugs auf, und ist die Steuereinheit dazu ausgebildet, das Öffnungssignal zum Öffnen der Schliessvorrichtung nur dann dem Transportbehälter zu übermitteln, wenn die geographische Position des Transportfahrzeugs in einem definierten geographischen Bereich liegt.

Ein entsprechendes Verfahren weist die folgenden Schritte auf:
- Bestimmen der geographischen Position des Transportfahrzeugs;
- Bestimmen, ob diese geographische Position innerhalb eines definierten geographischen Bereichs liegt; und
- Übermitteln des Öffnungssignals zum Öffnen der Schliessvorrichtung an den Transportbehälter nur dann, wenn dies der Fall ist.

Der geographische Bereich kann mehrere nicht zusammenhängende Teilbereiche umfassen. Der Schritt des Bestimmens, ob die geographische Position des Transportfahrzeugs innerhalb eines definierten geographischen Bereichs liegt, kann in der Steuereinheit des Transportfahrzeugs ausgeführt werden. Dies bedingt, dass der definierte geographische Bereich in der Steuereinheit gespeichert ist. In einer anderen Ausführungsform findet der genannte Schritt in einer zentralen Einheit statt, welche mit dem Transportfahrzeug respektive dessen Steuereinheit über eine drahtlose Kommunikationsverbindung verbunden ist. Das Transportfahrzeug respektive dessen Steuereinheit übermittelt damit der zentralen Einheit Informationen über die geographische Position des Transportfahrzeugs, und empfängt von der zentralen Einheit das Öffnungssignal zum Öffnen der Schliessvorrichtung.

Weitere bevorzugte Ausführungsformen gehen aus den abhängigen Patentansprüchen hervor.

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1: einen Transportbehälter mit geöffneter Klappe und geöffneter Abdeckung, wobei ein Überzug nicht gezeichnet ist, so dass ein Gestänge sichtbar ist;
- Figur 2: den Transportbehälter der Fig, 1 in einem seitlichen Querschnitt;
- Figur 3: den Transportbehälter mit geschlossener Klappe und teilweise geöffneter Abdeckung, wobei der Überzug nicht gezeichnet ist;
- Figur 4: den Transportbehälter mit geschlossener Klappe und geschlossener Abdeckung, wobei der Überzug nicht gezeichnet ist;
- Figur 5: den Transportbehälter der Fig, 4 in einem seitlichen Querschnitt;
- Figur 6: den Transportbehälter mit geschlossener Klappe und geschlossener Abdeckung, wobei der Überzug gezeichnet ist;
- Figur 7: den Transportbehälter mit geschlossener Klappe und geschlossener Abdeckung in einem partiellen seitlichen Querschnitt; und
- Figur 8: den Transportbehälter auf einem Transportfahrzeug.

Grundsätzlich sind in den Figuren gleiche Teile mit gleichen Bezugszeichen versehen.

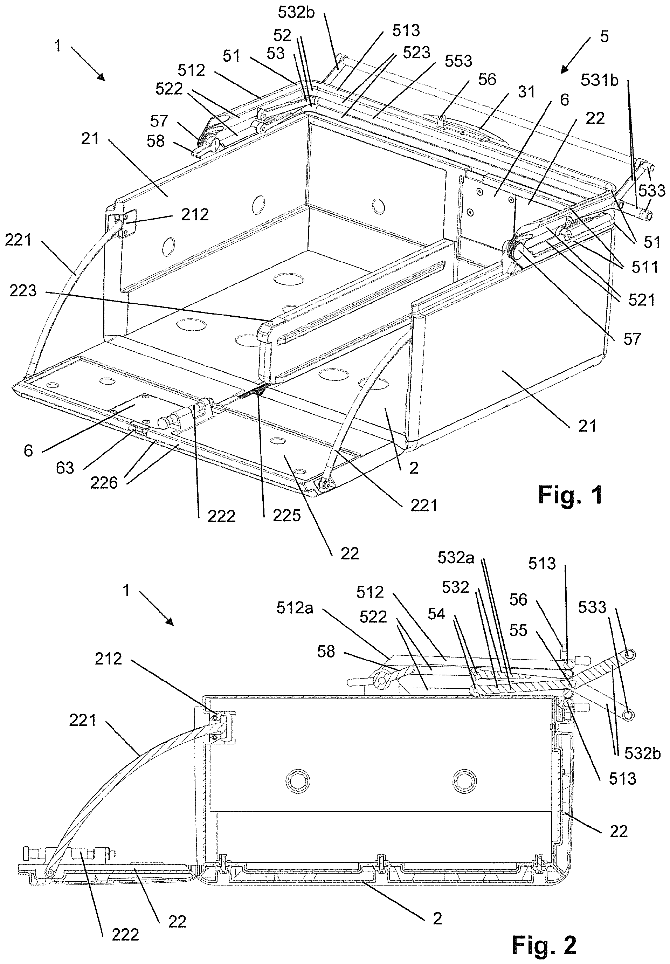

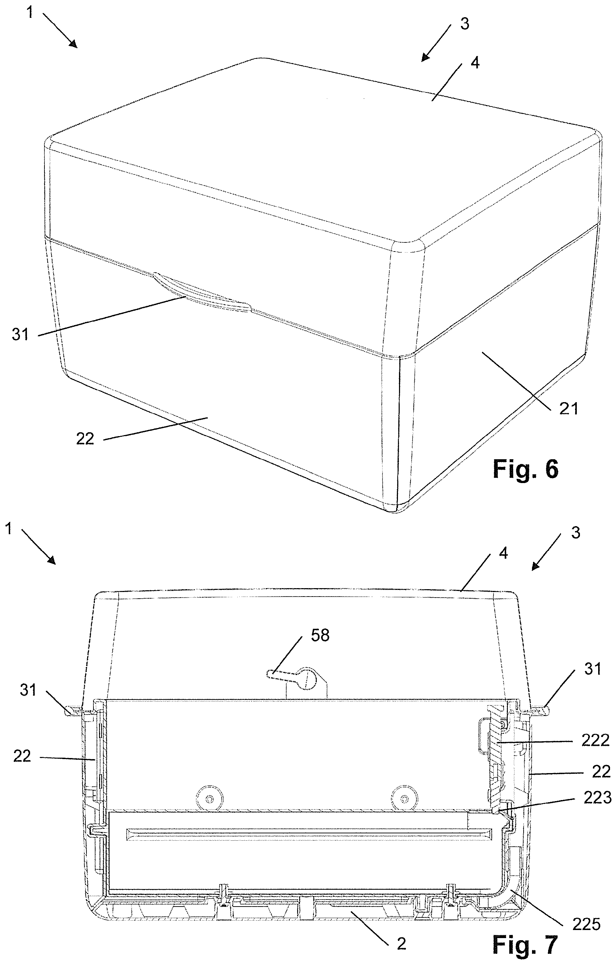

**Figur 1** zeigt einen Transportbehälter 1 mit geöffneter Klappe 22 und geöffneter Abdeckung, wobei ein Überzug nicht gezeichnet ist, so dass ein Gestänge 5 sichtbar ist. Die **Figuren 6** und **7** zeigen den Transportbehälter 1 mit dem Überzug 4, welcher über das Gestänge 5 gespannt ist und mit diesem eine Abdeckung 3 des Transportbehälters 1 bildet. Der Transportbehälter 1 weist einen Boden 2 und daran anschliessende Seitenwände 21 auf, wobei keine, eine oder zwei der Seitenwände als Klappen 22 ausgebildet sein können.

Im Folgenden werden zunächst die Elemente im Bereich einer der Klappen 22 beschrieben, wobei einige dieser Elemente auch in der **Figur 2** erkennbar sind. Die Klappe 22 ist um eine Klappenachse drehbar, welche im wesentlichen parallel zur Ebene des im wesentlichen flachen Bodens 2 verläuft. In einem offenen Zustand hängt die Klappe 22 an zwei Klappenhaltern 221, beispielsweise in einer Verlängerung der Ebene des Bodens 2. Die Klappenhalter 221 können elastisch sein, so dass bei einer Belastung der Klappe 22 diese nachgibt und ein belastender Gegenstand abrutscht. Damit wird verhindert, dass die Klappe 22 oder die Klappenhalter 221 beschädigt werden. Die Klappenhalter 221 können aus einem elastischen Kunststoff hergestellt sein.

Beim Schliessen der Klappe 22 fahren die Klappenhalter 221 jeweils in die Seitenwände 21 ein. Dazu kann innerhalb der Seitenwände 21 jeweils eine Führung 212 angeordnet sein, beispielsweise ein Hohlraum innerhalb der jeweiligen Seitenwand 21. Ist die Klappe 22 komplett geschlossen, rastet ein an der Klappe 22 angeordneter Rastbolzen 222 in eine Aufnahme 223 für den Rastbolzen ein. Zum Öffnen der Klappe 22 muss der Rastbolzen 222 betätigt werden. Der Rastbolzen 222 kann manuell betätigbar sein und/oder elektrisch respektive ferngesteuert, beispielsweise mittels einer Schliessvorrichtung 6 wie sie nachfolgend beschrieben ist.

Die Schliessvorrichtung 6 hält die Abdeckung 3 respektive einen äusseren Bügel 51 des Gestänges 5 fest, indem ein Einrast-Zapfen 56 des äusseren Bügels 51 an einer Aufnahme für den Einrast-Zapfen 63 der Schliessvorrichtung 6 einrastet. Die Schliessvorrichtung 6 kann elektrisch und/oder manuell betätigbar sein, um den Einrast-Zapfen 56 freizugeben und dadurch ein Anheben des äusseren Bügels 51 und ein Öffnen der Abdeckung 3 zu erlauben. Für die elektrische Betätigung kann eine zumindest im Bereich der Klappenachse biegsame Kabelführung 225 mit Kabeln zur Speisung und/oder Ansteuerung der Schliessvorrichtung 6 vorliegen.

Im geschlossenen Zustand der Abdeckung 3 kann die Abdeckung 3 mit der Klappe 22 verbunden sein und damit auch ein Öffnen der Klappe 22 verhindern. Dies ist insbesondere dann der Fall, wenn die Schliessvorrichtung 6 an der Klappe 22 angeordnet ist.

An einer Oberseite der Klappe 22 (im geschlossenen Zustand) sind ein oder mehrere Magnete 226 angeordnet, welche eine Querstrebe 513 eines äusseren Bügels 51 des Gestänges 5 halten können.

In einem geschlossenen Zustand bildet die Klappe 22 eine an zwei weitere Seitenwände 21 anschliessende Seitenwand. Eine zweite Klappe kann vorliegen, und ist im Wesentlichen gleich wie die bereits beschriebene Klappe aufgebaut.

Im Folgenden werden Elemente des Gestänges 5 beschrieben. Dabei werden am besten die in den **Figuren 1, 2** und 3 gezeigten Ansichten und Stellungen zusammen betrachtet. Das Gestänge 5 weist einen Satz von Bügeln auf, wovon innere und äussere Bügel 51, 52 mit Drehgelenken 57 im wesentlichen um dieselbe geometrische Drehachse drehbar angeordnet sind. Es können Feststellgriffe 58 oder andere Betätigungselemente zum Feststellen dieser Drehgelenke 57 angeordnet sein. Damit kann auch eine Reibung und damit eine Haltekraft oder ein Haltemoment der Drehgelenke 57 einstellbar sein. Die Feststellgriffe 58 können so ausgestaltet sein - beispielsweise das eine mit einem Linksgewinde und das andere mit einem Rechtsgewinde - dass beide Drehgelenke 57 arretiert werden, wenn der Benutzer die Feststellgriffe 58 von sich weg dreht, und freigegeben werden, wenn er die Feststellgriffe 58 zu sich hin dreht; oder umgekehrt. Gemäss einer Ausführungsform können noch weitere Feststellgriffe 59 an anderen Gelenken des Gestänges 5 vorliegen.

Die inneren und äusseren Bügel 51, 52 weisen jeweils von den an beiden Seiten des Transportbehälters 1 angeordneten Drehgelenken 57 ausgehende seitliche Arme 511, 512, 521, 522 auf. An ihren Enden sind diese seitlichen Arme jeweils durch Querstreben 513, 523 verbunden. Die inneren und äusseren Bügel 51, 52, zusammen mit einem Paar von Scherenbügeln 53, bilden einen faltbaren Mechanismus als Stütze für den Überzug 4 der Abdeckung 3. Die beiden Scherenbügel 53 weisen jeweils ebenfalls zwei seitliche Arme 531, 532 auf, die durch eine Querstrebe 533 miteinander verbunden sind. Die Querstreben aller Bügel verlaufen im wesentlichen gerade und orthogonal zu den jeweiligen seitlichen Armen. In anderen Ausführungsformen können die Querstreben gebogen sein. Die Querstreben verlaufen typischerweise parallel respektive in gleichbleibendem Abstand zueinander.

Die äusseren Bügel 51 weisen Griffe 31 auf und können wie schon beschrieben am Transportbehälter 1 einrasten. Die gezeigte Ausführungsform der Abdeckung 3 kann von zwei Seiten her geöffnet respektive aufgeklappt werden. Es ist natürlich auch möglich, einen der äusseren Bügel 51 unbeweglich zu montieren oder in der entsprechenden Seitenwand 21 oder Klappe 22 zu integrieren, wobei die Abdeckung 3 von einer Seite her geöffnet werden kann.

Die inneren Bügel 52 bilden zusammen mit den Scherenbügeln 53 einen Scherenmechanismus. Die seitlichen Arme 531, 532 der Scherenbügel 53 sind jeweils um eine äussere Scherenachse 54 drehbar an seitlichen Armen 521, 522 der inneren Bügel 52 montiert und kreuzen sich an einen zentralen Scherenachse 55 (siehe **Figur 2**). Entlang der zentralen Scherenachse 55 kann eine weitere Querstrebe 553 zur Verbindung der seitlichen Arme 531, 532 der Scherenbügel 53 angeordnet sein. Die seitlichen Arme 531, 532 der Scherenbügel 53 ragen über die zentrale Scherenachse 55 hinaus und sind an ihren Enden jeweils paarweise durch Querstreben 533 verbunden.

**Figur 2** zeigt den Transportbehälter der Figur 1 in einem seitlichen Querschnitt. Hierin ist die gegenseitige Lage
- der seitlichen Arme 512 der äusseren Bügel 51,
- der seitlichen Arme 522 der inneren Bügel 52, und
- der seitlichen Arme 532 der seitliche Arm 53
(jeweils an der hinteren Seite des Transportbehälters 1) und der Querstreben 533 gut erkennbar.

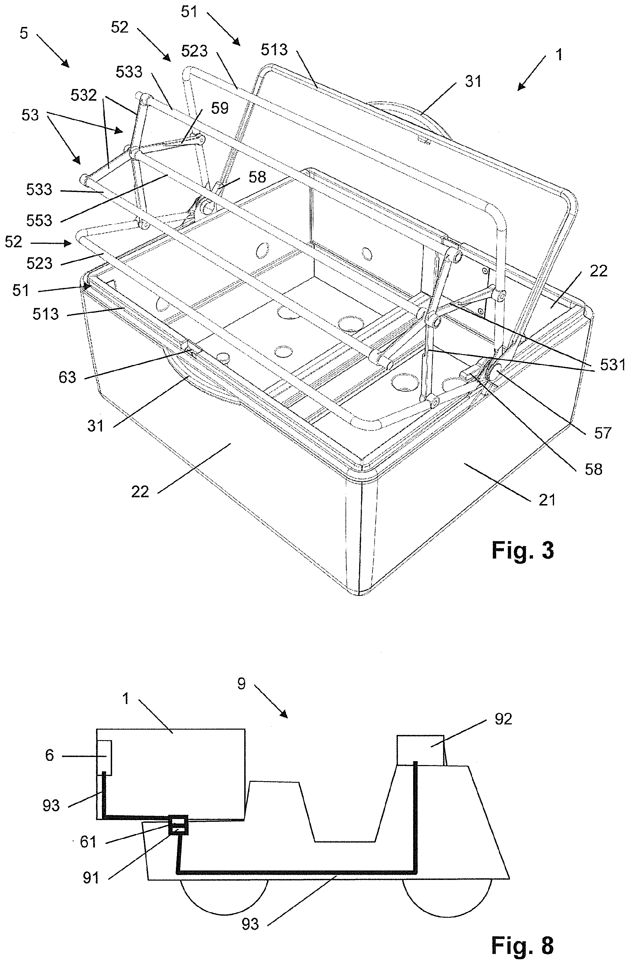

**Figur 3** zeigt den Transportbehälter mit geschlossener Klappe 22 und teilweise geöffneter Abdeckung 3, wobei der Überzug 4 nicht gezeichnet ist. Die bereits beschriebenen Elemente der beiden äusseren Bügel 51, der beiden inneren Bügel 52 und der beiden Scherenbügel 53 befinden sich in einer teilweise geöffneten Stellung. Links in der Figur ist der äussere Bügel 51 mit dem Einrast-Zapfen 56 an der Aufnahme 63 der Klappe 22 eingerastet, rechts ist der äussere Bügel 51 zusammen mit der rechten Querstrebe 513 teilweise hochgeklappt.

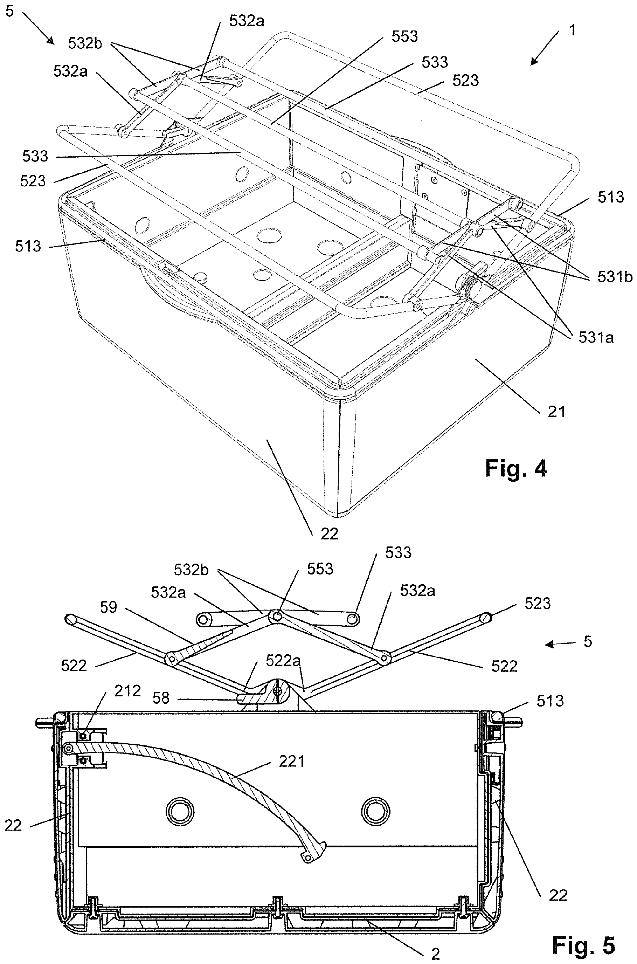

**Figur 4** zeigt den Transportbehälter mit geschlossener Klappe und geschlossener Abdeckung, wobei der Überzug nicht gezeichnet ist. Die Einrast-Zapfen 56 von beiden äusseren Bügeln 51 sind also an der jeweils entsprechenden Schliessvorrichtung 6 eingerastet.

**Figur 5** zeigt den Transportbehälter der **Figur 4** in einem seitlichen Querschnitt.

Wie aus den Figuren hervorgeht, weist die Abdeckung 3 im geschlossenen Zustand eine trapezförmige oder fast quaderförmige Aussenkontur auf, wobei ein Mittenbereich (von der Seite her gesehen) leicht überhöht sein kann. Im ganz geöffneten Zustand, also wenn das Gestänge 5 ganz auf eine Seite des Transportbehälters 1 geklappt ist, liegen die Querstreben 533 der Scherenbügel 53 weiter aussen (bezüglich des Drehgelenks 57) als die Querstreben 513, 523 der inneren und äusseren Bügel 51, 52. Dies macht es möglich, die Abdeckung 3 besonders weit zu öffnen.

Die seitlichen Arme 511, 512 der äusseren Bügel 51 wie auch die seitlichen Arme 521, 522 der inneren Bügel 52 weisen jeweils anschliessend an das Drehgelenk 57 einen Knick 521a, 522a auf. Im maximal geöffneten Zustand des Gestänges 5 respektive der Abdeckung 3 können somit die seitlichen Arme dieser Bügel parallel zueinander verlaufen, auch wenn sie um dasselbe Drehgelenk 57 drehbar sind.

**Figur 6** zeigt den Transportbehälter mit geschlossener Klappe und geschlossener Abdeckung, wobei der Überzug gezeichnet ist.

**Figur 7** zeigt den Transportbehälter mit geschlossener Klappe und geschlossener Abdeckung in einem partiellen seitlichen Querschnitt.

**Figur 8** zeigt den Transportbehälter 1 auf einem Transportfahrzeug 9. Zwischen der Schliessvorrichtung 6 des Transportbehälters 1 und einer Steuereinheit 92 des Transportfahrzeugs 9 ist eine Steuerverbindung 93 angeordnet. Die Steuerverbindung 93 kann eine lösbare Verbindung aufweisen, gebildet durch eine Steuerschnittstelle 61 des Transportbehälters 1 und eine mit dieser verbindbare Steuerschnittstelle 91 des Transportfahrzeugs 9.

## Patentansprüche

1. Transportbehälter (1), insbesondere zur Postverteilung, aufweisend einen Boden (2), an den Boden (2) anschliessende Seitenwände (21) und eine an die Seitenwände anschliessende öffenbare Abdeckung (3), wobei der Transportbehälter (1) zur Montage auf einem Transportfahrzeug vorgesehen ist, **dadurch gekennzeichnet, dass** die Abdeckung (3) faltbar ist und dazu einen Überzug (4) aufweist, welcher durch ein faltbares Gestänge (5) gestützt ist, wobei das Gestänge (5) aufweist
• mindestens zwei äussere Bügel (51) und zwei innere Bügel (52), die jeweils um eine Drehachse (514, 524) drehbar montiert sind, wobei die Drehachsen (514, 524) dieser vier Bügel (51, 52) parallel zueinander verlaufen,
• zwei Scherenbügel (53), wobei jeder der Scherenbügel (53) um eine zugeordnete äussere Scherenachse (54) drehbar mit einem der beiden inneren Bügel (52) verbunden ist und die beiden Scherenbügel (53) um eine zentrale Scherenachse (55) drehbar miteinander verbunden sind, und die Scherenbügel (53) und inneren Bügel (52) zusammen einen Scherenmechanismus bilden,
• wobei jeder der inneren Bügel (52) und jeder der Scherenbügel (53) jeweils zwei seitliche Arme (521, 522, 531, 532) aufweist, welche an einer ersten und einer zweiten Seite der Abdeckung (3) angeordnet sind, parallel zueinander verlaufen und durch mindestens eine Querstrebe (523, 533) verbunden sind, wobei die Querstrebe (523, 533) den Überzug (4) stützt,
• wobei in einem geöffneten Zustand der Abdeckung (3) die Querstreben (533) der Scherenbügel (53) von den Drehachsen (524) der inneren Bügel (52) weiter entfernt sind als die Querstreben (523) der inneren Bügel (52) selber,
• **dadurch gekennzeichnet, dass** entlang der zentralen Scherenachse (55) der beiden Scherenbügel (53) eine weitere Querstrebe (553) verläuft, und
• wobei die weitere Querstrebe eine weitere Stütze des Überzugs bildet.

2. Transportbehälter (1) gemäss Anspruch 1, wobei in einem geschlossenen Zustand der Abdeckung (3) die Querstreben (523, 533) der inneren Bügel (52) und der Scherenbügel (53) zumindest annähernd in einer gemeinsamen Ebene verlaufen.

3. Transportbehälter (1) gemäss einem der vorangehenden Ansprüche, wobei der Abstand zwischen der zentralen Scherenachse (55) und den äusseren Scherenachsen (54) zumindest annähernd gleich dem Abstand der Querstreben (523) der inneren Bügel (52) zu den äusseren Scherenachsen (54) ist.

4. Transportbehälter (1) gemäss einem der vorangehenden Ansprüche, wobei die seitlichen Arme (531, 532) der Scherenbügel (53) jeweils erste Abschnitte (531a, 532a) zwischen der entsprechenden äusseren Scherenachse (54) und der zentralen Scherenachse (55) sowie zweite Abschnitte (531b, 532b) zwischen der zentralen Scherenachse (55) und der Querstrebe (533) aufweisen, und die ersten und zweiten Abschnitte zueinander angewinkelt sind.

5. Transportbehälter (1) gemäss Anspruch 4, wobei die zweiten Abschnitte (531b, 532b) von jeweils zwei verbundenen seitlichen Armen (531, 532) der Scherenbügel (53) im offenen Zustand der Abdeckung (3) voneinander wegführen.

6. Transportbehälter (1) gemäss Anspruch 5, wobei der Abstand zwischen der Drehachse eines inneren Bügels (52) und seiner äussern Scherenachse (54) gleich der Länge des ersten Abschnittes (531a, 532a) des zugeordneten Scherenbügels (53) ist, und ein Winkel zwischen dem ersten und zweiten Abschnitt des Scherenbügels (53) zumindest annähernd gleich dem halben Winkel zwischen einem der inneren Bügel (52) und dem Scherenbügel (53) im geschlossenen Zustand der Abdeckung (3) ist.

7. Transportbehälter (1) gemäss einem der vorangehenden Ansprüche, wobei im geschlossenen Zustand der Abdeckung die Querstreben (523) der inneren Bügel (52) eine Ebene definieren und die Querstreben (533) der Scherenbügel (53) mit einem Abstand zu dieser Ebene von maximal 10%, maximal 20% oder maximal 30% des Abstandes der Querstreben (523) der inneren Bügel (52) verlaufen.

8. Transportbehälter (1) gemäss einem der vorangehenden Ansprüche, aufweisend mindestens einen Feststellmechanismus (58) zur Einstellung einer Reibung in zumindest Drehgelenken (57) zu den Drehachsen der inneren Bügel (52) und optional auch Drehgelenken zu den Drehachsen der äusseren Bügel (51).

9. Transportbehälter (1) gemäss einem der vorangehenden Ansprüche, aufweisend zwei separat betätige Feststellgriffe (58), jeweils an einer der Seiten der Abdeckung (3), wobei ein Drehsinn der Feststellgriffe (58) zum Erhöhen der Reibung in den jeweiligen Drehgelenken (57) in einem gemeinsamen Bezugssystem gleich ist.

10. Transportbehälter (1) gemäss einem der vorangehenden Ansprüche, wobei mindestens eine der Seitenwände dazu ausgebildet ist, geöffnet zu werden, und dadurch einen Zugang zum Inneren des Transportbehälters (1) zu erlauben, wobei die Seitenwand eine Klappe (22) ist, welche um eine Achse parallel zum Boden (2) klappbar ist und einen oder mehrere Klappenhalter (221) aufweist, welche eine Bewegung der Klappe (22) beim Aufklappen begrenzen.

11. Transportbehälter (1) gemäss Anspruch 10, wobei der eine oder mehrere Klappenhalter (221) jeweils innerhalb einer Seitenwand (21) geführt ist.

12. Transportbehälter (1) gemäss Anspruch 11, wobei der Klappenhalter (221) beim Verschliessen der Klappe (22) entlang einer Führung (212) innerhalb der Seitenwand (21) in die Seitenwand (21) hinein geschoben wird.

13. Transportbehälter (1) gemäss Anspruch 10 oder 11 oder 12, wobei der eine oder mehrere Klappenhalter (221) aus einem elastischen Material gebildet sind, und bei einer Belastung der Klappe (22) im geöffneten Zustand eine Bewegung der Klappe (22) über eine Position hinaus zulässt, welche die Klappe (22) im unbelasteten Zustand einnimmt.

## Claims

1. A transport container (1), in particular for postal distribution, comprising a base (2), side walls (21) which connect onto the base (2) and an openable covering (3) which connects onto the side walls, wherein the transport container (1) is provided for assembly on a transport vehicle, **characterised in that** the covering (3) is foldable and for this comprises an overlay (4) which is supported by a foldable linkage (5), wherein the linkage (5) comprises:
• at least two outer bows (51) and two inner bows (52), which are each rotatably assembled about a rotation axis (514, 524), wherein the rotation axes (514, 524) of these four bows (51, 52) run parallel to one another,
• two scissor bows (53), wherein each of the scissor bows (53) is rotatably connected to one of the two inner bows (52) about an assigned outer scissor axis (54) and both scissor bows (53) are rotatably connected to one another about a central scissor axis (55), and the scissor bows (53) and the inner bows (52) together form a scissor mechanism,
• wherein each of the inner bows (52) and each of the scissor bows (53) in each case comprise two lateral arms (521, 522, 531, 532) which are arranged on a first and on a second side of the covering (3), run parallel to one another and are connected by at least one transverse strut (523, 533), wherein the transverse strut (523, 533) supports the overlay (4), and
• wherein in the opened condition of the covering (3), the transverse struts (533) of the scissor bows (53) are distanced further from the rotation axes (524) of the inner bows (52) than the transverse struts (523) of the inner bows (52) themselves,
• **characterised in that** a further transverse strut (553) runs along the central scissor axis (55) of the two scissor bows (53), and
• wherein the further transverse strut forms a further support of the overlay.

2. A transport container (1) according to claim 1, wherein the transverse struts (523, 533) of the inner bows (52) and of the scissor bows (53) run at least approximately in a common plane in a closed condition of the covering (3).

3. A transport container (1) according to one of the preceding claims, wherein the distance between the central scissor axis (55) and the outer scissor axes (54) is at least approximately equal to the distance of the transverse struts (523) of the inner bows (52) to the outer scissor axes (54).

4. A transport container (1) according to one of the preceding claims, wherein the lateral arms (531, 532) of the scissor bows (53) each comprise first sections (531a, 532a) between the respective outer scissor axis (54) and the central scissor axis (55), as well as second sections (531b, 532b) between the central scissor axis (55) and the transverse strut (533), and the first and second sections are angled to one another.

5. A transport container (1) according to claim 4, wherein the second sections (531b, 532b) of two connected lateral arms (531, 532) of the scissor bows (53) lead away from one another in the opened condition of the covering (3).

6. A transport container (1) according to claim 5, wherein the distance between the rotation axis of an inner bow (52) and its outer scissor axis (54) is equal to the length of the first section (531a, 532a) of the assigned scissor bow (53), and an angle between the first and the second section of the scissor bow (53) is at least approximately equal to half the angle between one of the inner bows (52) and the scissor bow (53) in the closed condition of the covering (3).

7. A transport container (1) according to one of the preceding claims, wherein in the closed condition of the covering, the transverse struts (523) of the inner bows (52) define a plane and the transverse struts (533) of the scissor bows (53) run at a distance to this plane of maximally 10%, maximally 20% or maximally 30% of the distance of the transverse struts (523) of the inner bows (523).

8. A transport container (1) according to one of the preceding claims, comprising at least one securing mechanism (58) for adjusting a friction in at least rotation joints (57) for the rotation axes of the inner bows (52) and optionally also in rotation joints for the rotation axes of the outer bows (51).

9. A transport container (1) according to one of the preceding claims, comprising two separately actuated securing grips (53), each at one of the sides of the covering (3), wherein a rotation direction of the securing grips (58) for increasing the friction in the respective rotation joints (57) in a common reference system is the same.

10. A transport container (1) according to one of the preceding claims, wherein at least one of the side walls is designed to be opened, and by way of this to permit an access to the inside of the transport container (1), wherein the side wall is a flap (22) which is foldable about an axis parallel to the base (2) and comprises one or more flap holders (221) which limit a movement of the flap (22) on folding open.

11. A transport container (1) according to claim 10, wherein the one or more flap holders (221) are led within a side wall (21).

12. A transport container (1) according to claim 11, wherein the flap holder (221) is pushed along a guide (212) within the side wall (21) into the side wall (21) on closing the flap (22).

13. A transport container (1) according to claim 10 or 11 or 12, wherein the one or more flap holders (221) are formed from an elastic material, and given a loading of the flap (22) in the opened condition permits a movement of the flap (22) beyond a position which the flap (22) assumes in the non-loaded condition.

## Revendications

1. Récipient de transport (1), en particulier pour la distribution postale, présentant un fond (2), des parois latérales (21) qui se raccordent au fond (2) et un couvercle (3) apte à être ouvert et se raccordant aux parois latérales,
le récipient de transport (1) étant prévu pour être monté sur un véhicule de transport,
**caractérisé en ce que**
le couvercle (3) est rabattable et présente dans ce but un revêtement (4) soutenu par une tringlerie rabattable (5), la tringlerie (5) présentant :
au moins deux étriers extérieurs (51) et deux étriers intérieurs (52) tous montés à rotation autour d'axes de rotation respectifs (514, 524), les axes de rotation (514, 524) de ces quatre étriers (51, 52) s'étendant parallèlement les uns aux autres,
deux étriers (53) en ciseaux, chacun des étriers (53) en ciseaux étant relié à rotation autour d'un axe extérieur de ciseaux (54) associé à l'un des deux étriers intérieurs (52) et les deux étriers (53) en ciseaux étant reliés l'un à l'autre à rotation autour d'un axe central (55) de ciseaux, les étriers (53) en ciseaux et les étriers intérieurs (52) formant ensemble un mécanisme de ciseaux,
chacun des étriers intérieurs (52) et chacun des étriers (53) en ciseaux présentant deux bras latéraux (521, 522, 531, 532) disposés sur un premier et sur un deuxième côté du couvercle (3), s'étendant parallèlement l'un à l'autre et reliés par au moins une traverse (523, 533), la traverse (523, 533) soutenant le recouvrement (4),
les traverses (533) des étriers (53) en ciseaux étant plus éloignées des axes de rotation (54) des étriers intérieurs (52) que les traverses (523) des étriers intérieurs (52) proprement dits lorsque le couvercle (3) se trouve en position ouverte, **caractérisé en ce que**
une autre traverse (553) s'étend le long de l'axe central (55) de ciseaux des deux étriers (53) en ciseaux et
**en ce que** l'autre traverse forme un autre soutien du recouvrement.

2. Récipient de transport (1) selon la revendication 1, dans lequel les traverses (523, 533) des étriers intérieurs (52) et des étriers (53) en ciseaux s'étendent au moins approximativement dans un plan commun lorsque le couvercle (3) est en position fermée.

3. Récipient de transport (1) selon l'une des revendications précédentes, dans lequel la distance entre l'axe central (55) des ciseaux et les axes extérieurs (54) des ciseaux est au moins sensiblement égale à la distance entre les traverses (523) des étriers intérieurs (52) et les axes extérieurs (54) des ciseaux.

4. Récipient de transport (1) selon l'une des revendications précédentes, dans lequel chacun des bras latéraux (531, 532) des étriers (53) en ciseaux présente des premières sections (531a, 532a) situées entre l'axe extérieur correspondant (54) de ciseaux et l'axe central (55) de ciseaux et des deuxièmes sections (531b, 532b) entre l'axe central (55) de ciseaux et la traverse (533), les premières et les deuxièmes sections formant un angle l'une avec l'autre.

5. Récipient de transport (1) selon la revendication 4, dans lequel les deuxièmes sections (531b, 532b) de deux bras latéraux (531, 532) reliés l'un à l'autre des étriers (53) en ciseaux s'éloignent l'une de l'autre lorsque le couvercle (3) est en position ouverte.

6. Récipient de transport (1) selon la revendication 5, dans lequel la distance entre l'axe de rotation d'un étrier intérieur (52) et son axe extérieur de ciseaux (54) est identique à la longueur de la première section (531a, 532a) de l'étrier en ciseaux (53) associé et en ce que l'angle entre la première et la deuxième section de l'étrier en ciseaux (53) est au moins sensiblement égal à la moitié de l'angle entre l'un des étriers intérieurs (52) et l'étrier en ciseaux (53) lorsque le couvercle (3) est en position fermée.

7. Récipient de transport (1) selon l'une des revendications précédentes, dans lequel lorsque le couvercle est en position fermée, les traverses (523) des étriers intérieurs (52) définissent un plan et les traverses (533) des étriers en ciseaux (53) s'étendent à une distance de ce plan qui représente au plus 10 %, au plus 20 % ou au plus 30 % de la distance entre les traverses (523) des étriers intérieurs (52).

8. Récipient de transport (1) selon l'une des revendications précédentes, présentant au moins un mécanisme d'immobilisation (58) qui établit un frottement dans au moins les articulations de rotation (57) par rapport aux axes de rotation des étriers intérieurs (52) et facultativement aussi des articulations en rotation par rapport aux axes de rotation des étriers extérieurs (51).

9. Récipient de transport (1) selon l'une des revendications précédentes, présentant deux poignées d'immobilisation (58) actionnées séparément, chacune sur l'un des côtés du couvercle (3), le sens de rotation de la poignée d'immobilisation (58) en vue d'augmenter le frottement dans les articulations de rotation (57) concernées dans un système de référence commun est le même.

10. Récipient de transport (1) selon l'une des revendications précédentes, dans lequel au moins l'une des parois latérales est configurée pour être ouverte et permettre ainsi un accès à l'intérieur du récipient de transport (1), la paroi latérale étant un clapet (22) qui peut être rabattu autour d'un axe parallèle au fond (2) et qui présente un ou plusieurs supports de clapet (221) qui limitent le déplacement du clapet (22) lors de son ouverture.

11. Récipient de transport (1) selon la revendication 10, dans lequel un ou plusieurs des supports de clapet (221) est guidé à l'intérieur d'une paroi latérale (21) .

12. Récipient de transport (1) selon la revendication 11, dans lequel le support de clapet (221) est déplacé dans la paroi latérale (21) le long d'un guide (212) qui s'étend à l'intérieur de la paroi latérale (21), lors de la fermeture du clapet (22).

13. Récipient de transport (1) selon les revendications 10, 11 ou 12, dans lequel le ou les supports de clapet (221) sont formés d'un matériau élastique et permettent un déplacement du clapet (21) depuis une position que prend le clapet (22) à l'état non sollicité lorsque le clapet (22) est sollicité en position ouverte.
